# EUROPEAN PATENT APPLICATION

(11) **EP 2 950 177 A1**
(43) Date of publication of application: **02.12.2015**
(21) Application number: 15167600.4
(22) Date of filing: 13.05.2015
(51) Int. Cl.: G05B 23/02

(54) **ASSET CONDITION MONITORING**

(30) Priority: 30.05.2014 GB 201409590
(71) Applicant: Rolls-Royce plc, London SW1E 6AT (GB)
(72) Inventor: Dutta, Partha, Derby, Derbyshire DE24 8BJ (GB); Keong, Goh-Chi, Derby, Derbyshire DE24 8BJ (GB); Nadarajan, Sivakumar, Derby, Derbyshire DE24 8BJ (GB); Yang, Feng, Derby, Derbyshire DE24 8BJ (GB); Zhao, Xu, Derby, Derbyshire DE24 8BJ (GB); Shyh-hao, Kuo, Derby, Derbyshire DE24 8BJ (GB)
(74) Representative: Rolls-Royce plc

(57) **Abstract**

This invention concerns a machine fault diagnostic system. Sensors are provided for sensing an operational parameter of the machine over time in use and outputting corresponding sensor signals (18). A machine operation diagnosis tool (10) is arranged to receive the sensor signals and has a data store for operational parameter data indicative of a normal mode of machine operation and operational parameter data indicative of one or more known machine faults. The diagnosis tool (10) has one or more processor arranged to compare the received sensor signals (18) with the operational parameter data in the data store in order to determine a match with either the normal mode of operation or the one or more known machine fault, and wherein the processor sentences an unknown fault in the event that said match is not established. The system may record unknown faults and update the diagnosis tool as unknown faults become recognisable faults.

## Description

### BACKGROUND OF THE INVENTION

The present invention relates to asset monitoring, and in particular to machine operation health monitoring and/or management systems, typically allowing machine fault diagnostics.

The failure of a rotating electrical machine is often preceded by a period in which the machine can still operate to perform the desired function, for example rotating at the intended operational speed, but during which the machine operates with different internal electrical characteristics to those present in normal operation, for example by drawing a larger amount of current in one of the machine windings. Hence, the electrical operating conditions of such machines are often captured using a monitoring system, thereby allowing anomalies to be detected such that a failure of the machine may be pre-empted.

Many methods exist for detecting anomalies in operating conditions, and one such method is to detect the changes in the monitoring signals that signify a specific type of failure. For example, it is common to detect changes in the spectrum of the negative sequence voltage, as an indication of short circuit failure in the windings. However such a conventional method is only capable of detecting specific known types of abnormalities, and therefore is unable to detect any new abnormal behaviour that is present in the system.

A further diagnosis method comprises several parallel test modules which are followed by a module that detects persistence of the deviation. The test modules serve the purpose of detecting any one of the possible abnormal operational states, while the persistence module gathers information across the test modules over a period of time. This method is discussed in US 5,293,323.

US 2001/004229 discloses a possible implementation of the persistence module as a counter that stores how many times the test module detects an anomaly. This has the disadvantage of being less able to accommodate any short-lived, transient behaviour that is present in the signal.

A further disadvantage of the methods discussed above includes the assumption that there is an underlying state that can be detected more accurately through several observations. This requires prior knowledge of characteristics of the incipient fault state, which is not always available.

Furthermore, there is a common assumption of system non-stationarity, which is not true since system characteristics change with time in-service. Moreover, the system characteristics may be different due to operation over diverse operating environments. Conventional diagnostic systems are not generally robust to such variations.

There also exists an assumption that all faults are known a priori. With the exception of some common faults, not all faults can be identified before the design of the diagnostic system. With such an assumption in place, there is a risk of the misclassification of unknown faults.

It is therefore an aim of the present invention to provide a diagnostic framework which partially or substantially mitigates at least one of the problems identified above.

### BRIEF SUMMARY OF THE INVENTION

According to a first aspect of the invention there is provided a machine fault diagnostic system, the system comprising: a sensor for sensing an operational parameter of the machine over time in use and outputting a corresponding sensor signal; a diagnosis tool arranged to receive said sensor signal, said tool comprising a data store comprising operational parameter data indicative of a normal mode of machine operation and operational parameter data indicative of one or more known machine faults, wherein the diagnosis tool further comprises one or more processor arranged to compare the received sensor signals with the operational parameter data in the data store in order to determine a match with either the normal mode of operation or the one or more known machine fault, and wherein the processor sentences an unknown fault in the event that said match is not established.

The system may comprise a plurality of sensors of the same or different types, e.g. for sensing the same or different operational parameters. The diagnosis tool may determine a match with the normal operation data or known fault data for each sensed parameter. The stored normal and/or known fault data may comprise data for a plurality of parameter types and/or a single parameter at a plurality of points in the machine. The stored normal and/or known fault data may comprise a model.

The diagnostic tool may comprise a plurality of individual modules, each individual module representing a stage in the diagnostic process. The diagnostic module may comprise a signal processing module. The signal processing module may receive the sensor signal, for example substantially in real time or during a currently-active instance of machine operation.

The signal processing module may cleanse or refine an incoming signal. The signal processing module may eliminate noise from an incoming signal. The signal processing module may extract features from an incoming signal. The features extracted from an incoming signal may by features relevant to defining the characteristics of normal operation of the machine or else a fault. The signal processing module may attenuate an incoming signal. The signal processing module may carry out any, any combination or all, of the above-identified functions. The signal processing module may output a modified version of an incoming signal to a further module of the diagnostic tool.

The diagnostic tool may comprise an anomaly identifier, such as an anomaly identification module or modules. The anomaly identifier may comprise an anomaly detector and/or anomaly classifier. The anomaly identifier may receive a signal from the signal processing module. The anomaly identifier may be programmed to identify the normal operation parameter data and/or the known machine fault parameter data within the received signal.

The stored data for normal machine operation may comprise a known reference signal for the machine. The stored data for normal machine operation may comprise one or more threshold or range within which normal operation is determined. The anomaly identifier may be able to identify one or more divergence from the reference signal or normal operation range.

The anomaly identifier may be arranged to identify one or more feature in the received data signal such as, for example, a sudden/step change in gradient, a local peak or trough, a change in gradient sign, or the like.

The anomaly detector may operate according to a Principal Component Analysis (PCA) scheme. The anomaly detector may comprise a neural network. The anomaly detector may operate using clustering. The anomaly detection module may operate using a combination of the aforementioned schemes.

The anomaly detector may transmit an incoming signal and/or data feature identification signal to the next stage of the diagnostic module, for example on the condition that an abnormality/anomaly is detected in the incoming signal.

A plurality of diagnostic tools and/or anomaly detectors may be provided, for example being arranged to operate in parallel.

The anomaly identifier may comprise an anomaly or fault classifier, for example arranged to receive the output of the anomaly detector. The fault classifier may be programmed to recognise the profile of known fault classes or types.

The fault classification module may comprise a single classifier. The fault classification module may comprise a plurality of classifiers. The fault classifier may comprise a classifier for each attribute of the machine that is present in the incoming sensor signal(s).

The classifiers may be neural networks, decision tree classifiers, k-nearest neighbour classifiers, and the like. Each classifier may identify one or more fault of a different type. The classifiers may operate in parallel. Alternatively the classifiers operate in series.

The classifier may isolate one or more abnormal data features within the received signal and compare said features with the stored operational parameter data indicative of one or more known machine faults. The stored data may comprise one or more data features for one, or a combination, of operational parameters. The features may be identified by one or more standard feature characteristics such that features can be compared by comparing said characteristics.

The fault classifier may comprise a sentencer, such as a sentencing module. The sentencer may aggregate the faults identified by each classifier. This thereby allows for the identification of multiple faults that may occur simultaneously.

The fault classification module may identify if the potential fault fits the profile of any known fault classes.

If a fault is identified by the diagnosis tool, then an output indicative of the fault may be output, e.g. to a human operator of the machine.
The incoming sensor signal may be a composition of a plurality of signals. Each of the plurality of signals may correspond to an attribute of the machine. The real time signal may be a signal that is indicative of one or more physical property, such as any of, or any combination of, current, impedance, vibration, negative sequence voltage, third harmonic, and the like.

The incoming sensor signal may comprise a record of the sensor signal data over time. The sensor data may comprise a continuous sensor signal record or else a plurality of discrete sensor records over a period of time. The sensor signal may be transmitted/broadcast from the machine as a periodic burst of, e.g. continuous, data. The diagnosis may be made using time series analysis.

The diagnostic system may further comprise a system/diagnosis model modification module or tool. The modification tool may be programmable or updatable automatically and/or by a human operator of the machine. The modification tool may be updated using in-service data. The modification tool may be used to update the anomaly detector and/or the fault classifier. This is beneficial as each machine will have different characteristics and signatures, and so the modification tool allows the fault diagnostic framework of the invention to be utilised for machines with different parameters and varying tolerances.

The anomaly detector may operate in series or in parallel with the fault classifier. The anomaly detection stage of the diagnosis preferably precedes the fault classification stage.

The system fault diagnostic framework of the invention may advantageously be generalised to monitor the condition of any type of machine system. The invention may accommodate a standalone health monitoring system or may comprise part of a larger EHM or PHM system.

According to a second aspect of the invention, there is provided a method of machine fault diagnosis in accordance with the first aspect. According to a third aspect, there is provided a data carrier comprising machine readable instructions for the control of one or more processor within a machine fault diagnosis tool to perform the method of the second aspect.

### BRIEF DESCRIPTION OF THE DRAWINGS

Practicable embodiments of the invention are described in further detail below by way of example only with reference to the accompanying drawings, of which:
Fig 1 shows a schematic flow diagram of a machine fault diagnostic framework according to an example of the invention.
Fig 2 shows an example of a fault classification module according to an example of the invention;
Figure 3 an example of a further machine fault diagnosis framework according to the invention; and,
Figure 4 shows an example of a machine monitoring system according to the present invention.

### DETAILED DESCRIPTION OF THE INVENTION

The present invention derives in general from the realisation by the inventors that the manner in which faults/anomalies are identified by equipment health monitoring systems can be tailored to identify previously unknown or unrecognised faults, in a way which allows those faults to be accommodated in future machine health diagnoses.

An asset as referred to herein typically refers to a machine or a number of machines that are inter-reliant for correct operation thereof. The following description focuses on electrical machines, e.g. as used within a gas turbine engine, in particular but can be generalised to other kinds of machine, including the larger gas turbine engine or other complex systems, for which similar considerations apply. The invention is particularly suited to complex, high value or safety-critical machines, which have multiple potential failure modes and, for which, the possible failure modes could interact. The invention may be beneficial where the cost of maintenance work to be carried out on a machine is relatively high such that there exists a need to optimise machine maintenance schedules so that maintenance can be carried out at appropriate intervals and with minimal disruption to the machine operation and/or safety.

The early identification of abnormal machine behaviour, and the ability to pinpoint which component and/or subassembly is contributing to the abnormality is particularly important in order to be able to implement suitable corrective action before the abnormality affects other components, subassemblies or aspects of machine behaviour in a manner that can cause permanent damage to the machine. Depending on the type of machine and abnormality, responsive action could be required anywhere within the timescale of a few seconds or minutes to a few days or weeks. Typically, equipment health monitoring (EHM) applications allow preventative measures to be implemented to ensure normal machine operation over a longer period of time, rather than the immediate control of machine operation parameters by a front-line controller. However the EHM tools described herein may generate outputs for machine control or maintenance scheduling as necessary.

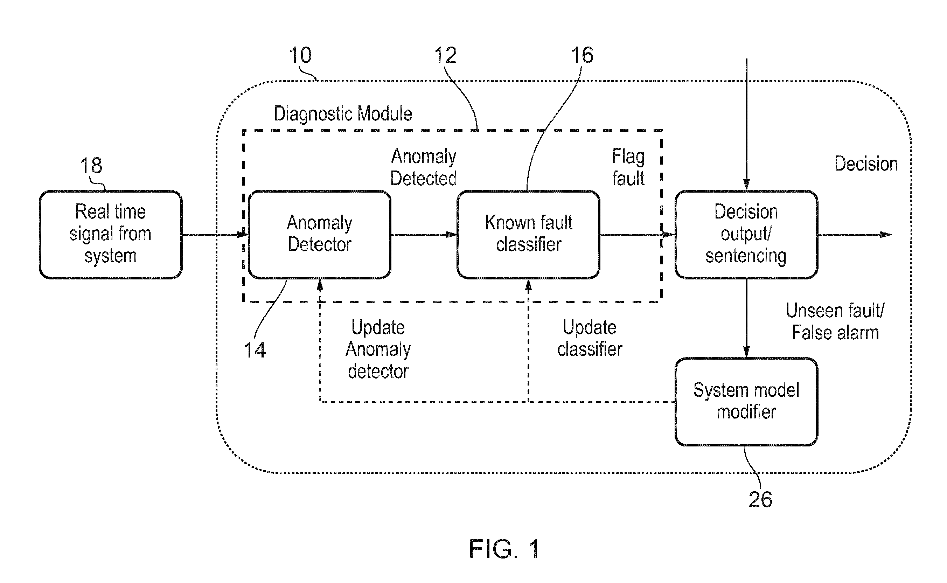

Referring to Figure 1, there is shown a system fault diagnostic framework for an electrical machine, comprising a diagnostic tool generally designated 10, which comprises one or more data processors arranged for operation as will be described below. The diagnostic tool 10 comprises a diagnostic module 12, which is itself composed of a plurality of individual modules or sub-modules that collectively operate to identify an operational state of a machine, including any aspects of machine operation that deviate from a normal operational state. The sequence and functions of those sub-modules contributes to the operation of the invention.

The tool 10 is arranged to receive a plurality of signals 18 derived from sensors on the machine as will be described below.

The diagnostic module 12 comprises at least an anomaly detection module 14 and a fault classification module 16, the module 16 being downstream in data-flow direction from the module 14. The sensor signals 18 are received as inputs by the anomaly detector 14.The anomaly detection module 14 is programmed with a model indicative of normal operation of the machine being monitored. The model comprises a known or predetermined reference signal for normal operation and may comprise one or more thresholds or boundaries indicative of an acceptable range of signal fluctuation for normal operation, e.g. whereby crossing a threshold indicates an instance of abnormality. The model typically comprises such a reference signal for a number of operational parameters of the machine that are sensed during machine use. The plurality of reference signals and/or associated thresholds may collectively form the model.

The anomaly detection module 14 serves as a first-stage abnormal change detector, e.g. by comparing received data signals with the normal model, and thus flags when an abnormality in machine operation has occurred, irrespective of the type or nature of the abnormality. This first stage detection may be computationally less intensive than a full fault analysis and may thus allow efficient computational usage of the diagnostic tool. Accordingly the anomaly detector 14 outputs a signal indicative of a machine operation anomaly to one or more downstream modules. The output may be an identifiable trigger signal for the fault classifier 16, which signal may comprise the received sensor data signal 18 or an amended/processed version thereof. That is to say, upon determination of an anomaly, the detector 14 may output the signal for analysis to the classifier 16.

The fault classification module 16 is programmed to recognise the profile of known faults or fault classes and is triggered to attempt to identify an abnormality with reference to such known faults by the anomaly detector 14. The known faults typically comprise types or classes of fault which have been previously identified to cause faults in the type of machine being monitored. In the example of an electrical machine (i.e. a motor or generator), such known faults may comprise, for instance, turn-to-turn short circuit faults, demagnetisation faults, bearing faults, and the like.

The fault classification module 16 is arranged in series with the anomaly detection module 14.

The fault classification module 16 has a data store, which may or may not be a common data store shared with the anomaly detector (i.e. on which the normal machine operation model is stored). For the known-fault classification function, the data store comprises records of one or more data feature indicative of a known fault. The term 'feature' in the context of fault classification refers to an identifiable change, or indeed potentially a lack of change, in a sensed machine operation parameter in time. A feature, typically relates to a change in gradient for a plot of the relevant parameter(s) over time, or else could be identified by a relationship between two parameters. However, depending on the precise nature of the fault to be identified, such a feature could concern any or any combination of:
- one or more individual (e.g. short lived or passing) peak, trough, inflection, zero-crossing, change in sign, or a sudden change in gradient, e.g. indicative of a step change in parameter value asymptote
- one or more longer-term or gradual changes in gradient towards or beyond a predetermined limit
- one or more parameter value meeting or exceeding a predetermined limit, either instantaneously or when averaged over a time window or instance of operation
- one or more parameter value exceeding a threshold according to a predetermined relationship with one or more further parameter
- a plurality or combination of such individual features occurring concurrently and/or within a predetermined time window and/or in a predetermined time sequence.

The above examples of recognisable data features are non-limiting and it is likely that other features may be used in addition to, or instead of those listed above. In practice any feature or combination of features will be linked to one or more operation variable for the machine as determined from the incoming sensor signals. Of the raw/received sensor signals, some signals/variables may offer better fault determining ability than others and thus may be determined to have a stronger impact on any fault detection. One aim of the feature extraction stage is to identify automatically which features (e.g. including which sensor signals or combinations of sensor signals) provide good indicators of potential faults such that those features can be used in anomaly detection and/or fault classification. Combinations of two or more features (i.e. relating to a plurality of features in one sensor signal or else a plurality of features shared between different received sensor signals for different operating variables) may readily be combined by a data-driven tool according to the present invention.

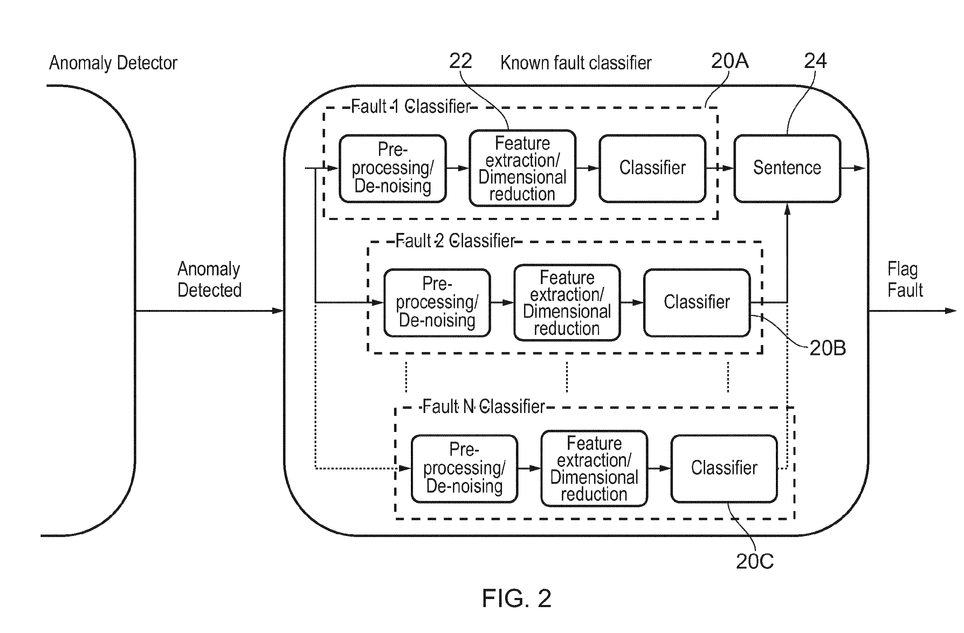

With reference to Figure 2, the fault classifier 16 comprises a plurality of classifiers 20, each of which may function to identify different known faults or types of faults. Thus the classifier module 16 comprises up to N individual classifiers, identified as 20A, 20B and 20C, where the number, N, is less than or equal to the number of known faults for the machine. The classifiers 20 are arranged to function in parallel in the example shown, such that an input signal to the classifier module 16 is of a common format that is identifiable and can be processed by each individual classifier 20.

The fault classification process generally requires pre-processing of the signal received by the classification module 16 in order to ensure that the quality of the signal is sufficient to allow accurate feature identification. In the example shown, each individual classifier 20 may comprise a pre-processing module in order to perform one or more pre-processing (e.g. signal clean-up) function. The pre-processing function may thus be specific to a corresponding type of feature identification. Pre-processing could include for example filtering to reduce signal variations due to noise, removal of outlying (e.g. erroneous) sensor readings, signal smoothing, digitising, time averaging or any similar data processing techniques. In some examples, certain pre-processing functions could be performed commonly for some or all classifiers 20, e.g. by the classifier 16 or else by the anomaly detector 14. However such refinements will be dependent on a particular intended application of the invention and need not be relevant according to a definition of a broadly applicable framework that can be adapted to specific machine monitoring applications as desired.

The fault classification process itself comprises identification and matching of the features in the received signal with one or more known reference features associated with known faults.

In view of the above-listed different types of data features that may need to be identified for any one fault classification, it will be appreciated that fault classification typically involves a multi-dimensional problem. Accordingly the classification process involves the use of a feature identification/extraction module or process 22 prior to being able to make an accurate fault determination.

The classification routine itself, at the heart of classifier 20, then compares the extracted features with the stored feature requirements indicative of a known fault. Certainty factors and corresponding logic may be applied to determine whether a match between the incoming sensor signal and one or more known-faults can be determined with the required level of certainty.

The output of each classifier 20 is fed to sentencing module 24. In this manner an isolated individual fault can be identified as well as multiple concurrent faults in the machine. The sentencing module can thus generate an output indicating the one or more faults identified. That output may be used in a number of ways, including any or any combination of: displaying of a corresponding message or alert to a user, e.g. on screen; transmission of the output to one or more associated systems, such as a maintenance scheduling system or a central machine monitoring facility; generating information or machine instructions for the control of the machine to operate in a manner that is sympathetic to the diagnosed fault, e.g. by setting operational threshold(s) and/or setting a maximum operational time before maintenance work is required.

If a fault classifier 20 does not establish a match with a known fault, it outputs a signal indicating that a classification attempt has been completed and no match was found. In the event that the fault classifiers 20 each output an indication that a match to a known fault has not been identified, i.e. the classifier module 16 as a whole indicates that no known faults have been identified, then the sentencing module 24 can output a positive determination that an unknown or new kind of fault has been identified for the machine.

Furthermore, having processed the signal indicative of the unknown fault, the classifier can output a signal indicative of the abnormal operation features identified in the received sensor signal for which no known fault was matched. Thus the sentencing module can collate those features by way of a record of the unknown fault and can log the unknown fault as having those features as its characteristics. The unknown fault will be logged with a unique identifier in the data store and may be communicated to a user or associated systems in the manner described above. In this way an unknown fault can be positively logged in the manner of a known fault but without any predetermined maintenance or operation instructions.

The benefit of logging the unknown fault in this manner is that the unknown fault can contribute to the future operation of the fault diagnosis tool.

The framework comprises a system model modification module 26. The system model modification module 26 is programmable by a human operator of the system/machine or else automatically according to the output of the diagnostic tool. The system model modification module 26 allows the diagnostic module to be updated, such that the framework is able to be utilised for machines with different parameters and varying tolerances and/or so that the diagnostic tool can be developed to accommodate new faults.

In one example, the finding of an unidentified fault is output to a system operator along with the characteristic features of the unknown fault, such that the operator can review the available information and make an assessment of the fault. Upon determination of the cause and effect of the unknown fault, the unknown fault can be reclassified as a known fault and a corresponding fault classifier (e.g. 20D) can be added to the fault classification module, for example using some or all of the features identified and logged in the original classification of the unknown fault by the other classifiers 20A-20N.

Additionally or alternatively the diagnosis tool may continue to operate in the manner described above and the system model modification module 26 can monitor the machine operation to determine if the logged unknown faults progress towards one or more of: a known fault, a known failure mode of the machine or a predictable failure mode of a machine sub-assembly or component. In this way an unknown fault can be learned by the system such that the classification module 16 can be updated with the symptoms/features of the anomaly as well as its impact on machine operation. In this manner an unknown fault can be used to the benefit of the machine health monitoring system even if it's full set of attributes have not yet been determined by human intervention/analysis.

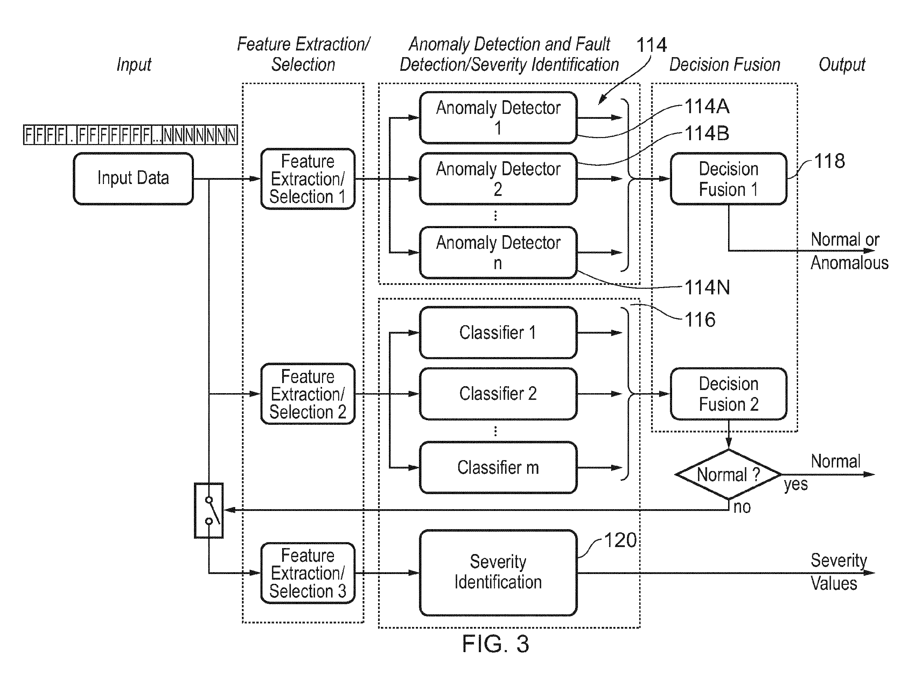

Turning now to Figure 3, there is shown a further example of a machine fault diagnostic framework or tool according to the invention. In this example, the tool 100 comprises pre-processing/feature extraction 112, anomaly detection 114 and fault classification 116 modules substantially as described above. Thus any of the description concerning the function of those individual modules may be applied to the example of Figure 3 also.

However in the example of Figure 3, a plurality of anomaly detectors 114 are provided. The anomaly detectors are detecting, not only that a non-normal operating condition exists, but also whether an abnormal condition relates to a known or unknown fault. Therefore the output of an unknown/abnormal fault can be made by the anomaly detector 114 in this example, rather than the fault classifier 116. In use the anomaly detector will operate to construct a normal region or range of operation for one or more operational variables being monitored. Each anomaly detector is pre-programmed to detect one or more specific anomaly, or type of anomaly, for example comprising one or more algorithm to determine whether input data features match one or more criterion relating to a normal operation range.

However the ability to pre-program for all potential anomalies is determined by the inventor to be unrealistic and so, in accordance with the invention, it is assumed that only some of the possible faults are known and understood. Known and/or unknown fault detection is performed by a plurality of anomaly detectors or modules, 114A, 114B, up to 114N, where N is less than or equal to the number of known faults for the machine. The anomaly detectors typically operate in parallel as shown, e.g. in response to a common input data signal.

The use of a plurality of anomaly detectors has been found to be particularly beneficial since it is very difficult for any single anomaly detector to build up a precise boundary between normal and abnormal operation since it can only be pre-programmed to recognise machine faults prior to operation and is only exposed to normal operating behaviour of the machine during operation until a time at which an unknown fault occurs. Therefore a decision made from the output of a plurality of anomaly detectors, each analysing a different feature or plurality of features (i.e. analysing the received sensor signals from a different perspective), has been found to improve not only fault detection accuracy but also the robustness of the system. Each of the plurality of anomaly detectors may perform a mapping to a different level of abstraction.

A decision module 118 therefore receives the outputs of all the anomaly detectors 114 in order to determine whether one or more instance of abnormal operation (i.e. a known or unknown fault) has been found. Sentencing is performed as described above and the output to the modification module 26 as described above.

As with the anomaly detectors 114 described above, a plurality of fault classifiers 116 is provided, such that each fault classifier can analyses a different feature or plurality of features so as to analyse the received sensor signals from a different perspective. Each of the plurality of fault classifiers may perform a mapping to a different level of abstraction.

The feature extraction/selection process for anomaly detection 114 differs from the feature extraction/selection process for fault classification 116. Feature extraction/selection for each of those processes may be performed in parallel as shown in Figure 3.

Furthermore, in the example of Figure 3, a fault severity identifier 120 is provided. The severity identifier 120 is triggered by a fault classification output by classifier(s) 116. A combination of the anomaly detection and fault classification outputs may be used in determining whether or not to determine a severity identification for the mode of machine operation under assessment. Upon determining to perform severity identification, a further feature extraction/selection process may be performed, i.e. specifically for the purpose of severity identification.

The severity identifier isolates the one or more parameter indicative of a known fault and determines a scale or magnitude value associated with the known fault once it has been identified. For example, a scale may be set for the range of possible parameter values associated with abnormal operation of the machine, e.g. a range defined between a normal operation mode and value of the parameter at which machine failure is known or predicted to occur. In this regard an allowable abnormal operational range may be set for which it is determined that machine operation can continue, whereas a maximum or minimum threshold value may be set, beyond which it is determined that machine operation may be unsafe, irreversible and/ or no longer possible.

The severity identification routine is enabled, typically only in response to determination of a known fault, shown schematically as a switch in Fig. 3.

A severity rating may thus be set based on the location of the sensed parameter value within the predetermined abnormal operational range. A severity percentage rating or level indicator may thus be determined and output. In differing examples, a linear of non-linear severity scale may be established for each relevant parameter. In the present example of turn-to-turn short circuits in an electrical machine, a resistance reading is used to determine the extent of damage to the electrical windings of the machine. The severity rating can be output as a short circuit percentage value. However it will be appreciated that such an approach can be adapted to a variety of different machines and fault parameters accordingly.

In different embodiments, in which a plurality of fault-indicating parameters are monitored by any individual classifier or collection of classifiers, the severity rating may comprise a summation of individual severity ratings of scores for the individual parameters. Thus an aggregate severity rating may be provided.

Also in the example of Figure 3, it is shown that any or any combination of anomaly detection, fault classification and/or severity identification modules may require different pre-processing and/or feature extraction. Therefore individual feature extraction routines 112 may be performed for each of those steps and, as such, the anomaly detection, fault classification and/or severity identification processes may be performed in parallel from a data flow perspective (e.g. not being reliant on the actual data output by another of those processes), regardless of whether those processes are performed in series or parallel with respect to timings. The features of multiple anomaly detectors and/or fault severity identification may thus be added to the embodiment of Figure 2 as necessary.

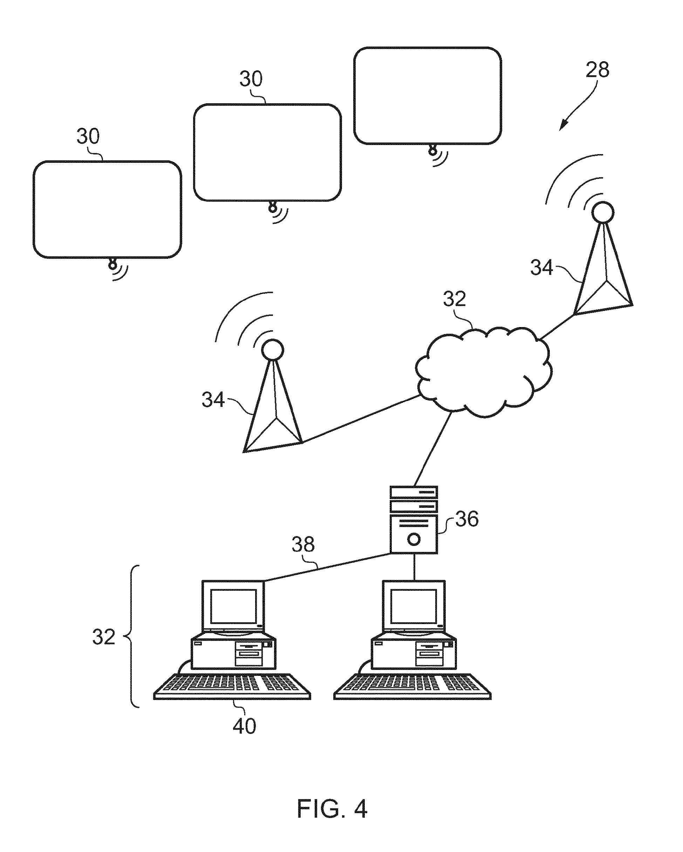

One example of a wider machine health monitoring system 28 that implements the above-described tools is shown in Figure 4. In this example, a plurality of machines 30 are being monitored by a common, remote monitoring facility 32. The machines in this example are gas turbine engines and/or one or more sub-assembly thereof, such as an electrical machine.

During operation of the machines 30, signals 18 are transmitted from the machine sensors to the diagnostic tool 10. The signals 18are preferably real time signal, and comprises a plurality of individual signals, each of which is representative of an operational attribute of the machine 30. The signals 18 are transmitted as a periodic burst of continuous data from the machine 11, and as such the diagnosis is performed using time series analysis.

The real time signals 18 are received by the diagnostic tool 10 and processed by the modules thereof in the manner described above. In the example of Figure 4, the signals are transmitted by the machines via a wide area network, for example including the internet 32 and/or a wireless data communication network, e.g. a mobile phone network comprising a plurality of base stations 34. The signals are received by one or more server 36 at a remote monitoring facility and made available over a local network 38 to one or more processing stations 40, embodying the diagnostic tool 10 of any of Figures 1-3.

In other examples of the invention, the machine health monitoring functions could be performed by one or more controller (i.e. diagnostic tool) on or associated with the individual machines themselves. The findings, i.e. identification of known and/or unknown faults, including the associated data, could then be transmitted to a central control facility. The machine controller may thus co-ordinate the transmission of fault findings to a control facility.

In either example, the central monitoring facility 32 may maintain a master data store (i.e. database) of known and unknown faults, such that correlations can be drawn between relevant known and/or unknown faults detected by a number of machines in the field in order to improve and update the relevant modules of the anomaly detector and/or classifier.

The sequence of anomaly detection and fault classification may thus be carried out locally for each machine and/or remotely at a monitoring facility. Any combination of the processing stages could potentially be shared between local and remote diagnosis tools/systems to cater for increased processing power or increased diagnosis speed as necessary.

The technique utilised in the identification of anomalies may be one of Principal Component Analysis (PCA), the use of neural networks, the use of clustering, or any such similar technique. The classifiers used to classify known/unknown faults may be neural networks, decision tree classifiers, k-nearest neighbour classifiers, or any other such classifier as is appropriate. Similarly, such techniques could be used by the anomaly detector if/when performing known/unknown fault identification. If one or more faults are identified by the detectors/classifiers, then the sentencing module aggregates the faults. This allows for the possibility of identifying multiple faults which occur simultaneously.

Known faults for electrical machines for example may include turn-to-turn short circuit faults, demagnetisation faults, bearing faults, and the like.

One focus of the invention described herein is the analysis of the a situation in which existing an existing fault classifier fails to identify a fault, such that the three possible outcomes can be further interrogated to the benefit of the larger fault learning system: 1) the anomaly is a true unknown fault; 2) the anomaly is a false positive; or 3) the classifier failed to identify the associated fault.

As well as the automated processes described above, human intervention is also made possible such that a human operator of the machine is able to utilise in-service data to update the models which define the anomaly detection and fault classification modules, via the use of the system model modification module 26.

## Claims

1. A machine fault diagnostic system, the system comprising:
a sensor for sensing an operational parameter of the machine over time in use and outputting a corresponding sensor signal;
a diagnosis tool arranged to receive said sensor signal, said tool comprising a data store comprising operational parameter data indicative of a normal mode of machine operation and operational parameter data indicative of one or more known machine faults,
wherein the diagnosis tool further comprises one or more processor arranged to compare the received sensor signals with the operational parameter data in the data store, the tool comprising an anomaly detector and an anomaly classifier, the anomaly detector being arranged to process the received sensor signals and determine whether said signals depart from the normal mode of operation and output a corresponding signal to the anomaly classifier in the event that an abnormal mode of operation is determined, the anomaly classifier being configured to determine a match with one or more known machine fault in the event that a signal of an abnormal mode of operation is output from the anomaly classifier, and wherein the processor sentences an unknown fault in the event that said match is not established.

2. A system according to claim 1, wherein the stored normal and/or known fault data comprise a machine operation model.

3. A system according to claim 1 or 2, wherein the anomaly detector and/or classifier is arranged to identify one or more gradient feature in the received data signal being indicative of abnormal machine operation such as, for example, a sudden/step change in gradient, a local peak or trough, a change in gradient sign and/or passing of a gradient threshold value.

4. A system according to any of the preceding claims, wherein the stored data for normal machine operation comprises a threshold range within which a normal operation reference signal lies, wherein the anomaly classifier processes one or more divergence from the normal operation threshold range.

5. A system according to any one of the preceding claims 6, wherein the anomaly detector comprises any or any combination of: a Principal Component Analysis (PCA) scheme; a neural network; a clustering analysis scheme.

6. A system according to any one of the preceding claims, wherein the diagnosis tool comprises any or any combination of feature extraction, dimensional reduction and/or fault classification modules.

7. A system according to any one of the preceding claims, wherein the anomaly classifier comprises a plurality of fault classifiers each programmed to recognise the profile of one or more known fault classes or types by isolating one or more abnormal data features within the received signal and comparing said features with the stored operational parameter data features indicative of one or more known machine faults.

8. A system according to any one of the preceding claims, wherein the anomaly detector comprises a plurality of fault detectors each programmed to recognise the profile of one or more known fault classes or types by isolating one or more abnormal data features within the received signal and comparing said features with the stored operational parameter data features indicative of one or more known machine faults.

9. A system according to any one of the preceding claims, wherein the fault identifier comprises a sentencer arranged to receive the positive or negative outcomes of fault detection or classification and to output a signal indicative of an unknown fault when all fault detectors and/or classifiers fail to determine a known fault, wherein the sentencer collates abnormal features identified but not matched by the fault classifiers and outputs a signal comprising said abnormal features as a record of an unknown operation abnormality or fault.

10. A system according to any one of the preceding claims, wherein the anomaly classifier comprises a neural network, decision tree classifier, or k-nearest neighbour classifier.

11. A system according to any one of the preceding claims, wherein the diagnosis tool comprises diagnosis model management module arranged to update the anomaly detector and/or anomaly identifier once a sentenced unknown fault is linked to an identified failure mode or fault.

12. A system according to any preceding claim, wherein the diagnosis tool comprises diagnosis model management module, said management module arranged to receive the sentencing signals for unknown faults determined by the diagnosis tool and to maintain a record of said unknown faults, wherein the model management module is arranged to match an unknown fault to a recognisable fault or failure mode of the machine once it occurs.

13. A system according to any preceding claim, wherein the diagnosis tool comprises a signal processing module arranged to cleanse incoming sensor signals prior to anomaly identification processing.

14. A system according to any preceding claim, wherein the diagnosis tool comprises one or more data feature extract module for processing the incoming sensor signals and identifying data features therein, said features being output to the diagnosis tool or a module thereof.

15. A method of performing machine fault diagnosis, comprising:
receiving sensor signals indicative of one or more operational parameter of a machine over time;
maintaining a data store comprising operational parameter data indicative of a normal mode of machine operation and operational parameter data indicative of one or more known machine faults,
processing the received sensor signals to compare the received sensor signals with the operational parameter data in the data store in order to determine a match with either the normal mode of operation or one or more known machine fault, and
sentencing an unknown fault in the event that said match is not established.
